**Europäisches Patentamt**

**European Patent Office**

**Office européen des brevets**

(11) Publication number: **0 135 288**
**B1**

(12) **EUROPEAN PATENT SPECIFICATION**

(45) Date of publication of patent specification: **09.09.87**

(51) Int. Cl.⁴: **F 16 D 41/06**

(21) Application number: **84304827.3**

(22) Date of filing: **16.07.84**

(54) **Roller-type one-way clutch.**

(30) Priority: **10.08.83 US 521676**

(43) Date of publication of application:
**27.03.85 Bulletin 85/13**

(45) Publication of the grant of the patent:
**09.09.87 Bulletin 87/37**

(84) Designated Contracting States:
**DE FR GB**

(56) References cited:
**FR-A-1 533 946**
**US-A-2 044 197**
**US-A-3 187 869**
**US-A-3 820 406**

(73) Proprietor: **GENERAL MOTORS CORPORATION**
**General Motors Building 3044 West Grand**
**Boulevard**
**Detroit Michigan 48202 (US)**

(72) Inventor: **Johnston, Albert David**
**10501 River Road**
**Huron Ohio, 44839 (US)**

(74) Representative: **Breakwell, John Neil Bower**
**et al**
**GM Patent Section Vauxhall Motors Limited**
**Luton Office (F6) P.O. Box No. 3 Kimpton Road**
**Luton Bedfordshire LU2 OSY (GB)**

Courier Press, Leamington Spa, England.

**Description**

This invention relates to a one-way clutch as specified in the preamble of claim 1, for example as disclosed in US—A—2,044,197 (Barthel).

One-way clutches are used when it is desired to let a rotating member (race) rotate freely in only one direction relative to another member, and are generally of the sprag element type or the roller type. In the sprag element type, both race members present cylindrical surfaces to the sprag elements, but in the roller type either an inner or an outer race has a series of cam ramps cut or otherwise formed therein. A series of rollers, one for each cam ramp, is held in a cage which is "tied" to the cam race (in other words, is constrained to rotate with the cam race), and a series of energizing springs mounted to the cage continually urges the respective rollers into a ready position of touching engagement with one of the cam ramps on the cam race and with the other race, which is a cylindrical ring.

In the case of the outer-cam design, when the cam race is over-running the inner ring the clutch will be "centrifugally disengaging" above a certain critical speed. That is, above the critical speed the rollers will experience enough centrifugal force to overcome the spring force of the energizing spring, and will move out of the ready position up the ramp, and so become disengaged from the inner ring. In applications in which it is important to have quick lock-up, as in an automatic transmission stator (reactor), operation at speeds above the critical speed is difficult.

Inner cam designs are more centrifugally neutral, but even so at certain high critical speeds of the over-running inner cam race relative to the outer ring the cam ramp may get sufficiently "ahead" of the roller (in the sense of relative rotary displacement) that a similar disengagement and high-speed instability of the roller occurs.

In some applications, such as the over-running clutch in a starting motor, the centrifugal disengagement is actually desirable to reduce friction in the over-running mode. The above US—A—2,044,197 is concerned with an over-running clutch for such an application in which energizing springs bear not directly on the rollers, but upon pivoted blocks which themselves bear on the rollers. In the over-running mode, centrifugal force pivots the blocks against the springs, and thereby allows the rollers to move from the cam ramps. This is desirable in the starter motor application, in which quick lock-up is not necessary and the clutch is usually in the over-running mode, because it reduced friction. A transmission, on the other hand, presents different requirements, in that the clutch must be able to provide a quick lock-up response.

The problem underlying the present invention is that of avoiding the high-speed roller drift in outer cam race type roller clutches which has hitherto prevented such clutches from being used in certain high-speed applications, such as in automatic transmissions.

For solving this problem a one-way clutch in accordance with the present invention is characterised by the features specified in the characterising portion of claim 1.

A one-way clutch in accordance with the present invention thereby overcomes the centrifugal disengagement problem discussed, and allows one-way roller clutches to be used in applications at higher than conventional critical speeds.

In a specific embodiment of a one-way clutch in accordance with the present invention, the clutch has a conventional series of caged rollers but additionally includes a series of novel spring mounting blocks, each of which is slidably mounted to the roller cage by guide tracks inclined in a direction, relative to a radial line of the clutch, which is opposite to the inclination of the ramps. Conventional energizing springs mounted to the movable blocks bear on the rollers and urge them into a ready position of touching engagement with a cam ramp on the outer race as well as with the cylindrical inner race ring. At high relative speeds of rotation, the centrifugal force which can cause disengagement of the rollers in a conventional design will cause the movable spring mounting blocks to move (slide) within the tracks in a generally outward direction which is opposite to the direction of the cam ramps, so putting more force on the spring to prevent the roller from moving along the ramp in the up-ramp direction. This force is proportional to the speed of angular rotation, because a higher speed provides more centrifugal force. Therefore, the use of this one-way clutch at speeds above normal critical speeds is possible with the rollers maintained in ready position for a quick transition from the free-wheel condition to the lock-up condition, as is necessary in automatic transmission and like applications. The roller clutch design is otherwise conventional, and fits easily in the available space between the cam race and the inner ring, and operates conventionally at lower speeds.

A one-way clutch in accordance with the present invention can be made smaller and lighter than a conventional one-way clutch, because the load is better distributed over the rollers.

In the drawing:

Figure 1 is a fragmentary elevation, with parts broken away and in section, of a preferred embodiment of a one-way clutch in accordance with the present invention, utilising rollers contained between a cam race and an inner ring;

Figure 2 is an enlarged view of a portion of Figure 1, showing the position of the rollers during lock-up; and

Figure 3 is a view similar to Figure 2 but showing the position of the rollers and associated spring mounting blocks in an over-running mode at higher than critical speed.

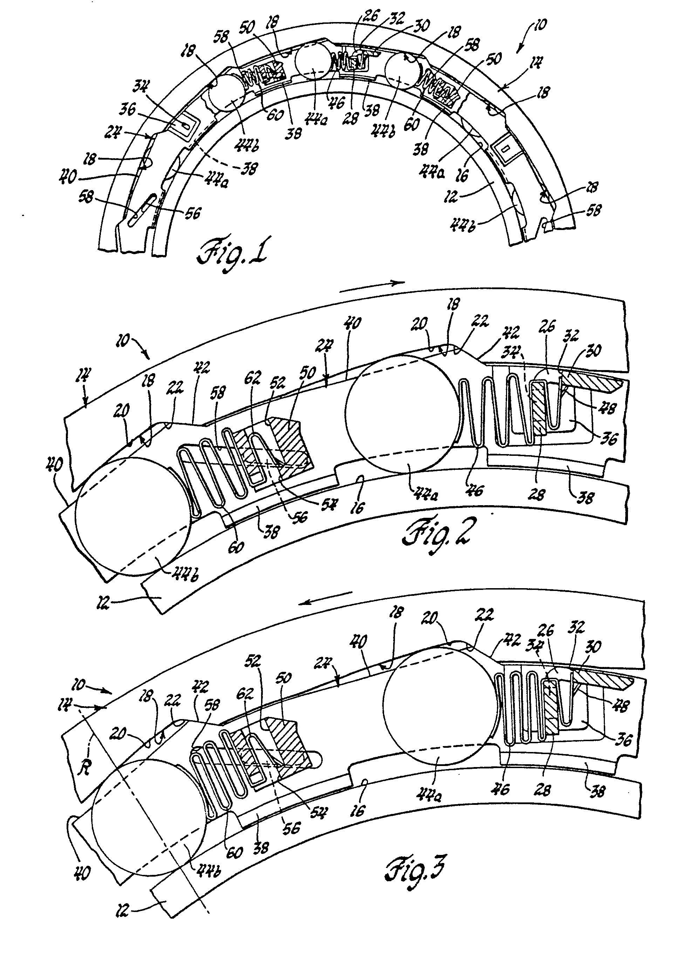

With reference first to Figure 1 of the drawing, a one-way roller-type clutch in accordance with the present invention is designated generally as 10, and includes, in a concentric arrangement, a cylindrical inner race ring 12 and an outer cam race 14. The inner ring 12 provides a cylindrical surface 16 for the roller clutch 10, whereas the cam race 14 has a series of generally saw tooth-shaped cam ramps 18 cut or otherwise formed therein. Each cam ramp 18 has a relatively shallow roller-engaging surface 20 inclined in one direction relative to a radial line of the clutch 10, labelled "R", and a relatively steeper (sharper) surface 22, sometimes known as the "hook".

Several elements of the roller clutch 10 are conventional, with a pair of generally annular parallel side rails 24 located in the generally annular space between the races 14 and 12, only one of which side rails is visible. The side rails 24 are maintained in spaced parallel relation by a series of circumferentially spaced cross-bars 26 visible in Figure 2, which have a generally L-shaped configuration with a radially extending wall 28 and a generally circumferentially extending wall 30 with a slot 32 therethrough, for a purpose to be described. An ear 34, best visible in Figure 1, at each end of the wall 28 extends through a slot in the side rail 24, where it is stamped and crimped over, leaving a slight dimple 36. This maintains the side rails 24 together as a substantially rigid cage assembly. The inner periphery of the side rails 24 includes circumferentially spaced pairs of inwardly turned bearing flanges 38, and the outer periphery includes matched pairs of clutch cam surfaces each comprising a relatively longer edge 40 cut at a slightly shallower angle than its matching cam ramp surface 20 and a backstop surface 42 closely engageable with a hook 22, all these being conventional features. In the over-running mode, the cage assembly formed by the side rails 24 and the cross-bars 26 turns with the outer cam race 14, and rides on the surface 16 of the ring 12 on a film of oil formed beneath the bearing flanges 38.

A series of rollers 44a and 44b is confined axially between the side rails 24, and between each cam ramp surface 20 and the ring surface 16. Each roller 44a and 44b operates in a conventional fashion when in the lock-up mode of Figure 2, with the cam race 14 being prevented from rotating relative to the ring 12 in the direction of the arrow. Each roller 44a corresponds to a respective one of the cross-bars 26, and is biased by a respective conventional energizing spring ("tickler" spring) 46 which has at one end a U-shaped clip that fits over the wall 28 through the slot 32. The free end of the spring 46 has a locking tab 48 engageable with the underside of the wall 30. A spring 46 bears on each roller 44a, maintaining it in a ready position of touching engagement with the surfaces described above. In this ready position, the rollers 44a and 44b are properly positioned to quickly respond to a change in relative direction between the races 12 and 14.

However, as may be seen in Figure 3, when the outer cam race 14 is over-running relative to the ring 12 in the opposite direction as shown by the arrow, the rollers 44a may at a certain critical speed move out of the ready position, up their cam ramp surfaces 20, and out of engagement with the ring surface 16 as they compress their springs 46.

This problem of roller drift is overcome by a speed-compensating spring mount in conformity with the present invention, as best seen in Figures 2 and 3. Each alternate roller 44b is subject to a movable spring mounting block 50, formed from any suitable material, such as metal or plastics material, which has a generally block shape with a central slot 52 extending generally radially therethrough and including a shoulder 54. Each side of the block 50 includes a pair of guide track followers 56 which project through a pair of matched, longer guide track slots 58 in the side rails 24 which are inclined in an opposite direction relative to the line "R". The guide track slots 58 are aligned through the side rails 24 and provide a stable guiding means. A tickler spring 60, similar to the spring 46, has a U-shaped end 62 which snap-fits within the slot 52, with its free end engaged with shoulder 54.

The spring 60 biases its respective roller 44b in identical fashion to the spring 46 when the roller clutch 10 is in the lock-up mode of Figure 2. However, in the Figure 3 over-running mode, the movable block 50 slides radially outwardly and circumferentially towards the roller 44b as the guide track followers 56 move within the guide track slots 58 under the same centrifugal force as would otherwise cause its roller 44b to disengage from the ring surface 16, in the same way as the adjacent roller 44a in Figure 3 has disengaged. Consequently, the spring 60 is further compressed as the block 50 moves, so proportionally increasing the force of the spring 60 with increasing speed to maintain its roller 44b in continual engagement with the cam ramp surface 20 and the ring surface 16, and thus in proper position for quick lock-up. The roller clutch 10 may thereby be operated at higher than usual critical speeds, so permitting higher speeds of operation than were previously possible.

Only every other roller 44b is provided with the mounting blocks 50 in conformity with the invention, this being done in the interests of compactness. The cross-bars 26 are necessary for rigidity and necessary for the other spring mounts, but in principle every roller could be provided with a mounting block in conformity with the invention if a separate means were provided for maintaining the side rails 24 as a rigid roller retention cage.

Other shapes could be provided for the spring mounting blocks 50, and the spring 60 could be mounted to the blocks 50 in other ways. Also, the guide track followers 56 and the guide track slots 58 could be reversed.

In addition the same design could be incorporated in an inner cam roller clutch, if desired, as long as the cam ramps and guide track slots were oppositely inclined.

Additionally, an arcuate shape could be provided to the guide track slots 58 and guide track followers 56, as long as the general incline direction were the same. This would provide a slight change in attitude (angle) of the mounted end of the energizing spring 60 as the block so moved, which could be desirable for some spring geometries.

## Claims

1. A one-way clutch (10) having a first member (14) and also having a second member (12) concentric thereto, in which the first member (14) comprises an over-running member that is permitted to rotate freely in one direction of rotation relative to the second member (12), whereas relative rotation in the opposite direction is prevented, and in which a series of rollers (44a, 44b) is held in a cage (24) mounted to the over-running first member (14), the rollers (44a, 44b) being movable towards a ready position of touching engagement between cam ramps (18) on the over-running first member (14) inclined in one direction relative to a radial line (R) of the concentric first and second members (14 and 12) and a cylindrical surface (16) on the second member (12), to respond to a change in the direction of relative rotation between the first and second members (14 and 12), the clutch having energizing springs (46, 60) for biasing the rollers (44a, 44b) towards the ready position, characterised in that means for adjusting the biasing force of at least some (60) of the springs (46, 60) comprises means (50) responsive to the centrifugal force of the rotating over-running first member (14) to thereby provide an increased biasing force on the respective springs (60) to counteract the effect of the over-running first member (14)-induced centrifugal force on the respective rollers (44b) and to maintain the said rollers (44b) in their ready position for quick response to a change in direction of relative rotation between the first and second members (14 and 12), and thereby allow the over-running first member (14) to rotate at higher speeds which would otherwise tend to cause the rollers (44b) to move out of the ready position.

2. A one-way clutch according to claim 1, characterised in that the means for adjusting the biasing force of at least some (60) of the springs (46, 60) comprises a series of movable spring mounting blocks (50) each of which holds one end of a respective energizing spring (60), the other end of which spring (60) biases a respective one (44b) of the rollers (44a, 44b) towards an engaged position, at least one guide track (58) is formed on the cage (24) or the mounting blocks (50) and is inclined in a direction opposite to the cam ramps (18), and a guide track follower (56) is formed on the cage (24) or the mounting blocks (50) respectively and extends in co-operating relation with the respective guide track (58), to allow the mounting blocks (50) to move in response to the centrifugal force of the freely rotating first member (14), whereby the movement of the blocks (50) compresses the energizing springs (60) to a greater extent in response to an increased speed of rotation of the over-running first member (14) to provide in response to the same centrifugal force a force sufficient to prevent their respective rollers (44b) from moving along the cam ramps (18) and out of engagement with the cylindrical surface (16), thereby maintaining the rollers (44b) in proper engaged position to prevent relative rotation of the first and second members (14 and 12) in the opposite direction.

## Patentansprüche

1. Ein-Richtungskupplung (10) mit einem ersten Glied (14) und ebenfalls einem zweiten dazu konzentrischen Glied (12), bei der das erste Glied (14) ein Überlaufglied darstellt, das in einer Drehrichtung relativ zum zweiten Glied (12) frei rotieren kann, während Relativdrehung in entgegengesetzter Richtung verhindert ist, und bei der eine Reihe von Walzen (44a, 44b) in einem an dem überlaufenden ersten Glied (14) angebrachten Käfig (24) gehalten ist, wobei die Walzen (44a, 44b) zu einer Bereit-Stellung mit Berührungsanlage zwischen Nockenanstiegsflächen (18) an dem überlaufenden ersten Glied (14), die an eine Richtung relativ zur einer Radiallinie (R) der konzentrischen ersten und zweiten Glieder (14 und 12) geneigt sind, und einer zylindrischen Fläche (16) an dem zweiten Glied (12) bewegbar sind, um auf eine Änderung der Relativdrehungs-Richtung zwischen dem ersten und dem zweiten Glied (14 und 12) zu reagieren, wobei die Kupplung Beaufschlagungsfedern (46, 60) zum Vorspannen der Walzen (44a, 44b) zur Bereit-Stellung besitzt, dadurch gekennzeichnet, daß Mittel zum Einstellen der Vorspannkraft mindestens einiger (60) der Federn (46, 60) auf die Zentrifugalkraft des rotierenden überlaufenden ersten Gliedes (14) ansprechende Mittel (50) umfaßt, um dadurch eine erhöhte Vorspannunkraft an den jeweiligen Federn (60) zu schaffen, um der Auswirkung der durch das überlaufende erste Glied (14) induzierten Zentrifugalkraft auf die jeweiligen Walzen (44b) gegenzuwirken und die Walzen (44b) in ihrer Bereit-Stellung zum schnellen Ansprechen auf eine Änderung in der Richtung der Relativdrehung zwischen dem ersten und dem zweiten Glied (14 und 12) zu halten und dadurch das überlaufende erste Glied (14) bei höheren Geschwindigkeiten rotieren zu lassen, die sonst dazu neigen würden, die Walzen (44b) aus ihrer Bereit-Stellung herauszubewegen zu lassen.

2. Ein-Richtungskupplung nach Anspruch 1, dadurch gekennzeichnet, daß die Mittel zum Einstellen der Vorspannkraft mindestens einiger (60) der Federn (46, 60) eine Reihe von bewegbaren Federbefestigungsblöcken (50) umfassen, von denen jeder eine Ende einer jeweiligen Beaufschlagungsfeder (60) hält, während das andere Ende der Feder (60) jeweils eine (44b) der Walzen (44a, 44b) zu einer beaufschlagten Stellung hin vorspannt, daß mindestens eine Führungsbahn (58) an dem Käfig (24) oder den Befestigungsblöcken (50) gebildet und in einer Richtung entgegengesetzt zu den Nocken-Schrägflächen (18) geneigt ist, und ein Führungsbahn-Folger (56) an dem Käfig (24) bzw. den Befestigungsblöcken (50) gebildet ist und sich in Zusammenwirkungs-Beziehung zu der jeweiligen Führungsbahn (58) erstreckt, um eine Bewegung der Befestigungsblöcke (50) in Abhängigkeit von der Zentrifugalkraft des frei rotierenden ersten Gliedes (14) zuzulassen, wodurch die Bewegung der Blöcke (50) die Beaufschlagungsfedern (60) zu einem höheren Ausmaß in Abhängigkeit von einer erhöhten Rotationsgeschwindigkeit des überlaufenden ersten Gliedes (14) zusammendrückt, um in Abhängigkeit von der gleichen Zentrifugalkraft eine Kraft zu schaffen, die ausreicht, um eine Bewegung der jeweiligen Walzen (44b) längs der Nocken-Schrägflächen (18) und außer Anlage mit der zylindrischen Oberfläche (16) zu verhindern und dadurch die Walzen (44b) in richtiger Anlagestellung zu halten, um Relativdrehung der ersten und zweiten Glieder (14 und 12) in der entgegengesetzten Richtung zu verhindern.

**Revendications**

1. Accouplement uni-directionnel (10) comprenant un premier élément (14) et, en outre, un deuxième élément (12) concentrique au premier, dans lequel le premier élément (14) comporte un élément tournant en roue libre, qui peut tourner librement dans un sens de rotation par rapport au deuxième élément (12), tandis que la rotation relative dans le sens opposé est interdite, et dans lequel une série de rouleaux (44a, 44b) est retenue dans une cage (24) montée sur le premier élément tournant en roue libre (14), les rouleaux (44a, 44b) pouvant se déplacer vers une position prête au contact de prise, entre les rampes de cames (18) du premier élément tournant en roue libre (14), qui sont inclinées dans un premier sens par rapport à un rayon (R) du premier et du deuxième éléments (14 et 12) concentriques entre eux, et une surface cylindrique (16) formée sur le deuxième élément (12), pour répondre à un changement du sens de la rotation relative entre le premier et le deuxième éléments (14 et 12), l'accouplement possédant des ressorts de poussée (46, 60) qui tendent à solliciter les rouleaux (44a, 44b) vers leur position prête, caractérisé en ce que des moyens servant à régler la force de sollicitation d'au moins certains (60) des ressorts (46, 60) comprennent des moyens (50) sensibles à la force centrifuge du premier élément tournant à roue libre (14) qui est en rotation, en exerçant une force de sollicitation augmentée sur leurs ressorts respectifs (60) afin de contrarier l'effet du premier élément tournant en roue libre (14), induit par la force centrifuge, sur leurs rouleaux respectifs (44b), et afin de maintenir lesdits rouleaux (44b) dans leur position prête à intervenir, pour obtenir une réponse rapide à un changement de sens de la rotation relative entre le premier et le deuxième éléments (14 et 12), et pour permettre ainsi au premier élément tournant en roue libre (14) de tourner à de grandes vitesses qui, autrement, tendraient à amener les rouleaux (44b) à s'écarter de leur position prête à intervenir.

2. Accouplement uni-directionnel selon la revendication 1, caractérisé en ce que les moyens servant à modifier la force de sollicitation d'au moins certains (60) des ressorts (46, 60) comprennent une série de blocs mobiles de supports de ressorts (50) dont chacun tient une extrémité de son ressort à pression respectif (60), l'autre extrémité de ce ressort (60) sollicitant un (44b) des rouleaux (44a, 44b) qui lui correspond respectivement vers une position de contact, au moins une fente de guidage (58) est formée sur la cage (24) ou sur les blocs supports de ressorts (50) et est incliné en sens inverse des rampes de cames (18), et un coulisseau de guidage (56) est formé sur la cage (24) ou sur les blocs supports de ressorts (50) respectivement et s'étend en position de coopération avec la fente de guidage (58) qui lui correspond respectivement pour permettre aux blocs supports (50) de se déplacer en réponse à la force centrifuge du premier élément (14) tournant en roue libre, de sorte que le mouvement des blocs (50) compriment les ressorts de poussée (60) dans une plus grande mesure en réponse à une plus grande vitesse de rotation du premier élément (14) tournant en roue libre pour exercer, en réponse à la même force centrifuge, une force suffisante pour empêcher leurs rouleaux respectifs (44b) de se déplacer le long des rampes de cames (18) et de s'écarter de la surface cylindrique (16), en maintenant de cette façon les rouleaux (44b) en bonne position de prise pour empêcher la rotation relative du premier et du deuxième éléments (14 et 12) dans le sens inverse.

0 135 288

Fig.1

Fig.2

Fig.3

1